(19) Europäisches Patentamt
European Patent Office
Office européen des brevets

(11) EP 0 553 031 B1

(12) # FASCICULE DE BREVET EUROPEEN

(45) Date de publication et mention de la délivrance du brevet:
**15.05.1996 Bulletin 1996/20**

(51) Int Cl.6: **G01L 3/00**, G01M 15/00

(21) Numéro de dépôt: **93400147.0**

(22) Date de dépôt: **22.01.1993**

(54) **Procédé de détection des ratés de combustion d'un moteur à combustion interne**

Verfahren zur Detektierung von Verbrennungsausfällen eines Verbrennungsmotors

Procedure for misfire detection in an internal combustion engine

(84) Etats contractants désignés:
**DE ES GB IT**

(30) Priorité: **24.01.1992 FR 9200738**

(43) Date de publication de la demande:
**28.07.1993 Bulletin 1993/30**

(73) Titulaire: **REGIE NATIONALE DES USINES RENAULT S.A.**
**F-92109 Boulogne Billancourt (FR)**

(72) Inventeurs:
- **Rousseau, Christian**
  **F-92160 Antony (FR)**
- **Jehanno, Gilles**
  **F-78410 Aubergenville (FR)**

(56) Documents cités:
**WO-A-90/07051**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un procédé de détection des ratés de combustion d'un moteur à combustion interne équipant notamment un véhicule automobile.

Dans le cadre des futures réglementations antipollution telles que la norme américaine OBD2 (On Board Diagnostic Level 2), il est prévu que les systèmes électroniques de contrôle moteur qui équipent les véhicules particuliers soient amenés à diagnostiquer certains défauts du moteur qui ont un impact sur les émissions de polluants.

C'est ainsi qu'il est prévu d'implanter dans les systèmes électroniques de contrôle moteur futurs, des dispositifs capables de détecter en roulant des défauts concernant, par exemple, l'efficacité du catalyseur, le fonctionnement de la sonde à oxygène ou le système d'EGR (recirculation des gaz d'échappement). Ces défauts provoqueront lorsqu'il y a défaillance d'un élément agissant sur le niveau de pollution soit, l'activation de modes de fonctionnement dégradés et/ou l'allumage d'un voyant au tableau de bord prévenant le conducteur (réglementations peu sévères) soit, obligeront à l'arrêt du véhicule (réglementations strictes).

La norme américaine future OBD2 et les projets de normes européennes équivalentes prévoient d'imposer la détection des ratés de combustion et d'identifier le cylindre responsable. Le système de détection devant fournir un chiffre représentant le pourcentage de ratés de combustion sur un nombre donné de cycles moteur.

Les équipementiers et les constructeurs automobiles ont donc développé un certain nombre de techniques de détection des ratés de combustion encore appelés misfire.

On peut citer la méthode de l'accéléromètre qui consiste à détecter un raté de combustion par analyse de la variation d'accélération longitudinale du véhicule.

La détection des ratés est également possible à partir des mesures par sonde à oxygène proportionnelle. De même on peut utiliser un capteur de pression chambre. On peut encore effectuer la mesure de la tension d'arc ou du courant d'ionisation. On peut enfin déduire l'existence de ratés de combustion de la mesure de la vitesse instantanée du vilebrequin.

Dans le document WO-A-9 007 051 les ratés sont détectés en comparant pour chaque cylindre le signal de puissance avec des variations espérées.

Si tous les dispositifs connus arrivent à détecter de manière plus ou moins correcte l'existence de ratés de combustion dans un moteur à combustion interne, leur mise en oeuvre s'avère délicate et leur coût assez élevé.

Le système de détection objet de la présente invention, permet d'obtenir un rapport coût/prestation bien plus favorable. Il permet en effet de détecter facilement, sans surcoût matériel et avec un surcoût logiciel faible, les ratés de combustion d'un moteur à explosion.

Ce système s'appuie sur le dispositif appelé "Capteur de Couple B4" qui a fait l'objet des demandes de brevet FR-A-2 681 425 et FR-A-2 681 426 déposées par la Demanderesse.

A partir des valeurs représentatives du couple engendrées par chacune des combustions du mélange gazeux dans les cylindres du moteur obtenu à partir du système susmentionné, le procédé comprend les opérations suivantes :

- calculer à partir de chaque valeur de couple produite par le dispositif de mesure une grandeur statistique représentative de la moyenne des valeurs de couple sur un nombre donné de combustions ;
- comparer la valeur de couple à une valeur de seuil déduite de la grandeur statistique ;
- produire une valeur indiquant l'existence d'un raté de combustion quand la valeur de couple est inférieure à ladite valeur de seuil.

Selon une autre caractéristique du procédé objet de l'invention, la grandeur statistique calculée à partir de la valeur de couple est représentative de la moyenne des valeurs de couple générée par l'ensemble des cylindres du moteur.

Selon un mode de réalisation particulier le moteur comprend :

- des repères de mesures disposés sur une couronne solidaire du vilebrequin du moteur,
- des moyens pour définir une référence d'indexation des repères,
- un capteur de défilement des repères, monté fixe au voisinage de la couronne,
- des moyens de traitement du signal pour produire à partir du signal issu du capteur, les valeurs représentatives du couple engendrées par chacune des combustions du mélange gazeux dans les cylindres du moteur.

Le procédé de détection des ratés de combustion est alors caractérisé en ce qu'il comprend les opérations suivantes, réitérées après chaque combustion :

(a) repérer pour chaque valeur de couple produite par les moyens de traitement du signal, le cylindre où la combustion s'est produite ;
(b) calculer à partir de la valeur de couple, une grandeur statistique représentative de la moyenne des valeurs de

couple pour un nombre donné de combustions sur l'ensemble des cylindres ;
(c) comparer la valeur de couple à une valeur de seuil déduite de la valeur statistique ;
(d) produire une valeur indiquant l'existence d'un raté de combustion, dans un cylindre du moteur, quand la valeur statistique est inférieure à la valeur de seuil.

Selon une autre caractéristique du procédé objet de l'invention, l'opération (c) comprend les opérations suivantes :

(c1) calculer l'écart, entre la valeur du couple et la valeur statistique ;
(c2) calculer le rapport entre l'écart ainsi calculé et la valeur statistique ;
(c3) comparer le rapport à une valeur de seuil prédéterminée.

Selon une autre caractéristique du procédé objet de l'invention l'opération (d) est complétée par les opérations suivantes :

(e) calculer à partir des valeurs indiquant l'existence d'un raté de combustion dans un cylindre du moteur, le nombre total de ratés de combustion survenus pendant un nombre prédéterminé de cycles moteur ;
(f) comparer le nombre total de ratés de combustion à une valeur de seuil prédéterminée ;
(g) produire une valeur indiquant l'existence d'un nombre anormal de ratés de combustion dans un cylindre du moteur quand le nombre est supérieur à la valeur de seuil.

Selon une autre caractéristique du procédé objet de l'invention, l'opération (g) est complétée par l'opération suivante :

(f) visualiser les valeurs indiquant la présence ou non d'un nombre anormal de ratés de combustion, en identifiant le cylindre en cause.

On comprendra mieux les buts, aspects et avantages de la présente invention, d'après la description donnée ci-après de modes de réalisation de l'invention appliqués à un moteur quatre temps et quatre cylindres, ces modes de réalisation étant donnés à titre d'exemples non limitatifs, en se référant au dessin annexé, dans lequel :

- la figure unique est un schéma fonctionnel des différents éléments constitutifs d'un dispositif de mise en oeuvre du procédé selon l'invention.

La figure décrit un dispositif de détection des ratés de combustion équipant un moteur à combustion interne poly-cylindrique, par exemple du type à quatre cylindres en ligne et à quatre temps. Seuls les éléments nécessaires à la compréhension du dispositif ont été figurés.

Le dispositif objet de l'invention est un dispositif de traitement du couple gaz Cg produit par chacune des combustions. Cette valeur est obtenue grâce au dispositif de traitement du signal référencé 10.

Le dispositif 10 schématise le système de mesure du couple gaz Cg, produit par chaque combustion du mélange gazeux dans un moteur thermique à quatre temps et à quatre cylindres, à partir d'une couronne de mesure dentée 12, solidaire du volant d'inertie, par exemple la couronne de type standard montée sur les moteurs à allumage électronique.

A la couronne 12, est associé un capteur fixe 22, par exemple à réluctance variable, qui délivre un signal alternatif de fréquence proportionnelle à la vitesse de défilement des dents de la couronne, c'est à dire représentative de la vitesse instantanée du volant.

Le passage de ce signal alternatif, de fréquence proportionnelle à la vitesse de défilement des dents de la couronne, à la valeur représentative du couple gaz Cg, engendré par chaque combustion du mélange gazeux dans les cylindres du moteur, est donc opéré par le dispositif 10 qui est détaillé dans les demandes de brevet français susmentionnées n° 91/11273 et 91/11274 relatives à un "procédé et dispositif de mesure du couple d'un moteur thermique à combustion interne".

Comme cela est décrit dans cette demande de brevet, le couple gaz est notamment obtenu à partir de l'analyse de la raie quatre du spectre du signal délivré par le capteur fixe 22 observant la roue dentée 12 solidaire du vilebrequin.

Le couple gaz Cg est alors obtenu par la relation :

$$Cg = A_i (D4 \cos \phi 4)_i * (N_{tour}/30)^3 + B_i * (N_{tour}/30)^2$$

$$\text{avec : } (D4 \cos \phi 4)_i = \left(1/11 \sum_{k=0}^{21} d_k \cos(k\pi / 11)\right)$$

$d_k$ est la durée de la dent k.
$N_{tour}$ est le régime moteur en T/mn.

Ces formules correspondent à l'utilisation d'une couronne 12 comportant à sa périphérie trente-huit dents identiques, telles que celles référencées 14 et 16, qui sont réparties en deux séries de dix-neuf dents séparées par deux dents de référence, telles que celles référencées 18 et 20, qui sont diamétralement opposées et qui ont une largeur triple de celle des autres dents.

Ces formules et la description de la couronne sont bien entendu adaptées au moteur quatre temps et quatre cylindres choisi comme support du mode de réalisation de l'invention.

Lors du fonctionnement du moteur et à partir des valeurs successives de couple, calculées après chaque combustion par le dispositif 10 et référencées Cg,n pour caractériser la valeur de couple correspondante à la n-ième combustion de la période de fonctionnement du moteur en cours, le dispositif objet de l'invention opère un décodage cylindre permettant d'affecter ces valeurs aux cylindres du moteur correspondants.

Pour ce faire, les valeurs successives de couple Cg,n sont régulièrement réparties, "modulo quatre", dans quatre adresses distinctes correspondant chacune à un cylindre donné. En utilisant parallèlement un dispositif de détrompage cylindre, non figuré, du type de ceux utilisés pour le pilotage des systèmes d'allumage ou des systèmes d'injection on identifie alors chacun des cylindres ainsi isolé.

La répartition des valeurs est mise en oeuvre par un système de type démultiplexeur 101 de caractéristique quatre égal au nombre de cylindre. Les valeurs successives de couple Cg,n sont alors identifiées sous la forme Cg,n,i où i renvoi au cylindre considéré (i varie donc de 1 à 4) et n au nombre de combustions identifiées jusque là dans ce cylindre.

Parallèlement à l'identification du cylindre correspondant, le dispositif objet de l'invention procède à chaque nouvelle valeur de couple Cg,n à l'élaboration d'une valeur statistique globale MCg,n rendant compte de la moyenne des différentes valeurs de couple mesurées sur l'ensemble des cylindres. Cette valeur statistique globale est calculée pour être plus particulièrement représentative des valeurs de couple observées sur un certain horizon, comme par exemple les cent dernières mesures.

Le calcul de la valeur statistique MCg,n est obtenu par le traitement des valeurs Cg,n par un filtre passe-bas 121 de la forme 1 / (1 + tp).

Pour toute nouvelle valeur du couple Cg,n la valeur statistique MCg,n est déterminée à partir de la valeur statistique calculée précédemment MCg,n-1, à partir de la formulation suivante :

$$MCg,n = MCg,n-1 + ((Cg,n - (MCg,n-1)) / F)$$

où F est la constante du filtre.

La valeur statistique MCg,n ayant été calculée, le dispositif de détection des ratés de combustion objet de l'invention opère la comparaison entre la valeur de couple Cg,n,i et la valeur statistique.

La détection des ratés de combustion est en effet définie par : un raté de combustion est caractérisé par une valeur de couple inférieur à un certain pourcentage de la valeur statistique globale.

Par exemple, si la valeur statistique est de 40 mN et le seuil à 32 %, on aura détecté un raté de combustion si la valeur de couple est inférieure à

$$40 - (40 * 32 / 100) = 40 - 12.8 = 27.2 \text{ mN}$$

Pour ce faire, le dispositif objet de l'invention comporte des moyens soustracteurs formés par un soustracteur 131 permettant le calcul de l'écart Δ Cg,n,i entre la valeur du couple Cg,n,i et la moyenne mobile MCg,n. Cet écart est alors repris par des moyens diviseurs formés par un diviseur 141 permettant le calcul du rapport RCg,n,i entre ledit écart Δ Cg,n,i et ladite moyenne mobile MCg,n. Enfin le rapport RCg,n,i est comparé à une valeur de seuil -S1 prédéterminé, (-S1 étant un nombre réel négatif compris entre 0 et -100), cette valeur de seuil est déterminée expérimentalement et peut être éventuellement différente d'un cylindre à l'autre (-S1,i) pour tenir compte d'éventuels défauts de répartition. La valeur de seuil peut également dépendre des conditions de fonctionnement du moteur notamment pour prendre en compte les phases de fonctionnement en régimes transitoires, comme par exemple les fortes accélérations ou les fortes décélérations.

Compte tenu des fluctuations normales de couple, même en régime stabilisé, dues notamment aux défauts de répartition du carburant, on peut estimer qu'à partir d'une valeur de couple inférieure de plus de 32 % à la valeur statistique représentative de la moyenne des valeurs de couple sur un certain horizon il y a raté de combustion (dans

cette hypothèse là -S1=-32)

La comparaison entre le rapport RCg,n,i et le seuil -S est opérée par un comparateur 151. Ce comparateur délivre alors une valeur V,n,i de type binaire : 0 si le rapport est au dessus du seuil -S1 et 1 dans le cas contraire. Cette valeur définie ainsi pour chacune des combustion ayant lieu dans le cylindre s'il y a eu ou non raté.

A partir de l'information V,n,i indiquant ou non l'existence d'un raté de combustion, il est alors possible de produire une information plus élaborée donnant le nombre de ratés de combustion survenus dans le cylindre i considéré pendant un nombre donné de cycles moteur. Seule en effet la détection d'un nombre significatif de ratés de combustion implique l'existence d'un véritable dysfonctionnement du moteur auquel il convient de remédier.

Cette information élaborée peut être réalisée de différentes manières suivant que la sommation des ratés "élémentaires" s'opère périodiquement sur des plages données de valeurs, par exemple tous les mille cycles moteur, ou que la sommation s'opère à chaque combustion sur une plage glissante de valeurs, par exemple sur les mille derniers cycles.

Le dispositif présenté concerne plus particulièrement la seconde approche. Pour ce faire les valeurs V,n,i alimentent un registre à décalage 161 apte à stocker un nombre donné de valeurs, par exemple pour mille valeurs, le stockage de la valeur V,n,i coïncidant avec le destockage de la valeur V,n,i-1000.

Les valeurs stockées dans le registre à décalage 161 sont additionnées dans un sommateur 171 qui génère une valeur T,n,i correspondant à la somme des valeurs V,n,i correspondant aux 1000 derniers cycles du moteur. Cette valeur T,n,i est ensuite comparée à une valeur de seuil S2 dans un comparateur 181 produisant une valeur de type binaire W,n,i indiquant la présence ou non de ratés de combustions pour le cylindre i considéré ; W,n,i vaut 0 si T,n,i < S2, et 1 si T,n,i > S2.

Cette valeur de seuil S2 est déterminée à la fois par des normes législatives et/ou des mesures expérimentales opérées sur le moteur. On peut par exemple prendre pour S2 la valeur 200, ce qui signifie que la détection de plus de deux cent ratés sur les mille derniers cycles signifie l'existence de dysfonctionnements dans le cylindre i considéré.

La valeur W,n,i est alors exploitée dans des moyens de visualisation tel qu'un voyant d'alerte ou encore un calculateur de bord de façon à prévenir le conducteur d'un dysfonctionnement de combustion dans le cylindre i.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi il est possible d'opérer la détection des ratés de combustion de la façon suivante.

A partir des valeurs du couple, obtenues pour chacune des combustions du moteur, on procède directement à l'élaboration d'une valeur statistique globale qui rend compte de la moyenne des différentes valeurs de couple mesurées sur l'ensemble des cylindres (cette valeur statistique globale est choisie comme précédemment, pour être plus particulièrement représentative des valeurs de couple observées sur un horizon donné).

L'apparition d'un raté de combustion est alors détectée de la façon suivante : un raté de combustion est caractérisé par une valeur de couple inférieure à un certain pourcentage de la valeur statistique globale.

La mise en place d'un système de comparaison entre chaque nouvelle valeur de couple et la valeur statistique qui en est déduite permet de générer une information de type binaire (oui non) associée à chaque combustion et indiquant la survenue ou non d'un raté.

Cette information est alors reprise par un système qui compte le nombre de ratés sur un horizon donné de combustions. Lorsqu'il apparaît que ce nombre est supérieur à un seuil prédéterminé, par exemple 4%, alors et pendant toute la durée où le seuil demeure dépassé, il est procédé à une reconnaissance cylindre en démultiplexant cette information "présence ou non de raté de combustion" modulo le nombre de cylindres et en associant à chacun des groupes l'adresse d'un cylindre par un système de détrompage adéquat. Le ou les cylindres où se produisent les ratés sont alors signalés au conducteur.

Il est également possible d'élaborer plusieurs valeurs statistiques qui rendent compte des moyennes des valeurs de couple de chacun des cylindres et de comparer la valeur instantanée du couple à la valeur moyenne du cylindre concerné.

Ainsi quelque soit le mode de réalisation, l'invention permet de respecter les futures normes anti-pollution en détectant de façon précise la survenue de ratés et de repérer le ou les cylindres en cause à partir de la seule information couple gaz.

Pour ce qui est de la mise en oeuvre du dispositif de détection des ratés de combustion, quelque soit le mode de réalisation choisi, elle peut être réalisée sous diverses formes :

- soit avec des composants d'électronique analogique pour lesquels les sommateurs, comparateurs et autres filtres sont réalisés à l'aide d'amplificateurs opérationnels ;
- soit avec des composants d'électronique numérique qui réaliseraient la fonction en logique câblée ;
- soit par un algorithme de traitement du signal implanté sous forme d'un module logiciel composant d'un système

logiciel de contrôle moteur faisant fonctionner le microcontrôleur d'un calculateur électronique.

- soit encore, par une puce spécifique (custom) dont les ressources hardware et software auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

De même l'invention comprend tous les équivalents techniques appliqués à un moteur à combustion interne quelque soit son cycle de combustion (2 temps,4 temps), le carburant utilisé diesel ou essence ou encore, le nombre de ses cylindres.

## Revendications

1. Procédé pour détecter un raté de combustion survenant dans un cylindre d'un moteur à combustion interne, le moteur comprenant un dispositif de mesure (10) pour produire une valeur du couple gaz (Cg,n) pour chacune des combustions (n), caractérisé en ce qu'il comprend les opérations suivantes :

   - calculer à partir de chaque valeur de couple (Cg,n) produite par le dispositif de mesure (10) une grandeur statistique (MCg,n) représentative de la moyenne des valeurs de couple (Cg,n) sur un nombre donné de combustions ;
   - comparer ladite valeur de couple (Cg,n) à une valeur de seuil déduite de ladite grandeur statistique (MCg,n);
   - produire une valeur indiquant l'existence d'un raté de combustion quand ladite valeur de couple est inférieure à ladite valeur de seuil.

2. Procédé pour détecter un raté de combustion selon la revendication 1, caractérisé en ce que la grandeur statistique (MCg,n) calculée à partir de ladite valeur de couple (Cg,n) est représentative de la moyenne des valeurs de couple générée par l'ensemble des cylindres du moteur.

3. Procédé pour détecter un raté de combustion selon la revendication 2, le moteur comprenant :

   - des repères de mesures (14,16) disposés sur une couronne (12) solidaire du vilebrequin du moteur,
   - des moyens (18,20) pour définir une référence d'indexation des repères,
   - un capteur (22) de défilement des repères, monté fixe au voisinage de la couronne (12),
   - des moyens de traitement du signal (10) pour produire à partir du signal issu du capteur (22), les valeurs représentatives du couple (Cg,n) engendrées par chacune des combustions (n) du mélange gazeux dans les cylindres du moteur,

   caractérisé en ce qu'il comprend les opérations suivantes, réitérés après chaque combustion :

   (a) repérer pour chaque valeur de couple (Cg,n) produite par lesdits moyens de traitement du signal (10), le cylindre (i) où la combustion s'est produite ;
   (b) calculer à partir de ladite valeur de couple (Cg,n), une grandeur statistique (MCg,n) représentative de la moyenne des valeurs de couple pour un nombre donné de combustions sur l'ensemble des cylindres ;
   (c) comparer ladite valeur de couple (Cg,n,i) à une valeur de seuil déduite de ladite valeur statistique (MCg,n) ;
   (d) produire une valeur (V,n,i) indiquant l'existence d'un raté de combustion, dans un cylindre (i) du moteur, quand ladite valeur statistique (Cg,n,i) est inférieure à ladite valeur de seuil.

4. Procédé pour détecter des ratés de combustion selon la revendication 3, caractérisé en ce que l'opération (c) comprend les opérations suivantes :

   (c1) calculer l'écart (Δ Cg,n,i), entre ladite valeur du couple (Cg,n,i) et ladite valeur statistique (MCg,n) ;
   (c2) calculer le rapport (RCg,n,i) entre ledit écart (Δ Cg,n,i) et ladite valeur statistique (MCg,n,) ;
   (c3) comparer ledit rapport (RCg,n,i) à une valeur de seuil prédéterminée (-S1).

5. Procédé pour détecter des ratés de combustion selon l'une quelconque des revendications 3 à 4, caractérisé en ce que l'opération (d) est complétée par les opérations suivantes :

   (e) calculer à partir des valeurs (V,n,i) indiquant l'existence d'un raté de combustion dans un cylindre (i) du moteur, le nombre total (T,n,i) de ratés de combustion survenus pendant un nombre prédéterminé de cycles

moteur ;
(f) comparer ledit nombre total (T,n,i) de ratés de combustion à une valeur de seuil prédéterminée (S2) ;
(g) produire une valeur (W,n,i) indiquant l'existence d'un nombre anormal de ratés de combustion dans un cylindre (i) du moteur quand ledit nombre (T,n,i) est supérieur à ladite valeur de seuil (S2).

**6.** Procédé pour détecter des ratés de combustion selon la revendication 5, caractérisé en ce que l'opération (g) est complétée par l'opération suivante :
(f) visualiser les valeurs (W,n,i) indiquant la présence ou non d'un nombre anormal de ratés de combustion, en identifiant le cylindre en cause (i).

**7.** Procédé pour détecter des ratés de combustion selon l'une quelconque des revendications 3 à 6, caractérisé en ce que chaque valeur de seuil est spécifique au cylindre correspondant.

**Patentansprüche**

**1.** Verfahren zur Erfassung einer in einem Zylinder einer Brennkraftmaschine auftretenden Fehlzündung, wobei der Motor eine Meßvorrichtung (10) zum Erzeugen eines Wertes des Gasmoments (Cg,n) für jede der Verbrennungen (n) umfaßt, dadurch gekennzeichnet, daß es die folgenden Schritte umfaßt:

- Berechnen einer den Mittelwert der Momentwerte (Cg,n) über eine gegebene Anzahl von Verbrennungen repräsentierenden statistischen Größe (MCg,n) aus jedem durch die Meßvorrichtung (10) erzeugten Momentwert (Cg,n);
- Vergleichen des Momentwerts (Cg,n) mit einem aus der statistischen Größe (MCg,n) abgeleiteten Schwellenwert;
- Erzeugen eines das Vorhandensein einer Fehlzündung anzeigenden Werts, wenn der Momentwert kleiner ist als der Schwellenwert.

**2.** Verfahren zur Erfassung einer Fehlzündung nach Anspruch 1 dadurch gekennzeichnet, daß die aus dem Momentwert (Cg,n) berechnete statistische Größe (MCg,n) den Mittelwert der durch die Gesamtheit der Zylinder des Motors erzeugten Momentwerte repräsentiert.

**3.** Verfahren zur Erfassung einer Fehlzündung nach Anspruch 2, wobei der Motor umfaßt:

- auf einem mit der Kurbelwelle des Motors verbundenen Kranz (12) angeordnete Meßmarkierungen (14, 16),
- Mittel (18, 20) zum Festlegen einer Bezugsindizierung der Markierungen,
- einen fest in der Nähe des Kranzes (12) angebrachten Aufnehmer (22) für das Vorbeilaufen der Markierungen,
- Signalverarbeitungsmittel (10) zum Erzeugen der die durch jede der Verbrennungen (n) des gasförmigen Gemischs in den Zylindern des Motors erzeugten, das Moment (Cg,n) repräsentierenden Werte aus dem durch den Aufnehmer (22) abgegebenen Signal,
dadurch gekennzeichnet, daß es die folgenden, nach jeder Verbrennung wiederholten Schritte umfaßt:

(a) Markieren des Zylinders (i), in welchem die Verbrennung erfolgt, für jeden durch die Signalverarbeitungsmittel (10) erzeugten Momentwert (Cg,n);
(b) Berechnen einer den Mittelwert der Momentwerte für eine gegebene Zahl von Verbrennungen über alle Zylinder repräsentierenden statistischen Größe (MCg,n) aus dem Momentwert (Cg,n);
(c) Vergleichen des Momentwerts (Cg,n,i) mit einem aus dem statistischen Wert (MCg,n) abgeleiteten Schwellenwert;
(d) Erzeugen eines das Vorliegen einer Fehlzündung in einem Zylinder (i) des Motors anzeigenden Werts (V,n,i), wenn der statistische Wert (Cg,n,i) kleiner ist als der Schwellenwert.

**4.** Verfahren zur Erfassung von Fehlzündungen nach Anspruch 3, dadurch gekennzeichnet, daß der Schritt (c) die nachfolgenden Schritte umfaßt:

(c1) Berechnen des Abstands ($\Delta$Cg,n,i) zwischen dem Momentwert (Cg,n,i) und dem statistischen Wert (MCg, n); (c2) Berechnen des Verhältnisses (RCg,n,i) zwischen dem Abstand ($\Delta$Cg,n,i) und dem statistischen Wert (MCg,n);
(c3) Vergleichen des Verhältnisses (RCg,n,i) mit einem vorbestimmten Schwellenwert (-S1).

5. Verfahren zur Erfassung von Fehlzündungen nach einem der Ansprüche 3 bis 4, dadurch gekennzeichnet, daß der Schritt (d) durch die folgenden Schritte vervollständigt wird:

   (e) Berechnen der Gesamtzahl (T,n,i) der während einer vorbestimmten Anzahl von Motorzyklen aufgetretenen Fehlzündungen aus den das Vorliegen einer Fehlzündung in einem Zylinder (i) des Motors anzeigenden Werten (V,n,i);
   (f) Vergleichen der Gesamtzahl (T,n,i) der Fehlzündungen mit einem vorbestimmten Schwellenwert (S2);
   (g) Erzeugen eines das Vorliegen einer anormalen Zahl von Fehlzündungen in einem Zylinder (i) des Motors anzeigenden Werts (W,n,i), wenn die Zahl (T,n,i) größer ist als der Schwellenwert (S2).

6. Verfahren zur Erfassung von Fehlzündungen nach Anspruch 5, dadurch gekennzeichnet, daß der Schritt (g) durch den folgenden Schritt vervollständigt wird:

   (f) Sichtbarmachen der das Vorliegen oder Fehlen einer anormalen Zahl von Fehlzündungen anzeigenden Werte (W,n,i) durch Identifizieren des betroffenen Zylinders (i).

7. Verfahren zur Erfassung von Fehlzündungen nach einem der Ansprüche 3 bis 6, dadurch gekennzeichnet, daß jeder Schwellenwert für den entsprechenden Zylinder spezifisch ist.

## Claims

1. A method for detecting a misfire occurring in a cylinder in an internal combustion engine, the engine comprising a measuring device (10) for producing a gas torque value ($C_{g,n}$) for each firing (n), characterized in that it comprises the following operations:

   - calculating, from each value of the torque ($C_{g,n}$) produced by the measuring device (10), a statistical figure ($MC_{g,n}$) which represents the average of the torque values ($C_{g,n}$) over a given number of firings;
   - comparing said torque value ($C_{g,n}$) with a threshold value deduced from said statistical figure ($MC_{g,n}$);
   - producing a value which indicates the existence of a misfire when said torque value is less than said threshold value.

2. A method for detecting a misfire according to claim 1, characterized in that the statistical figure ($MC_{g,n}$) calculated from said torque value ($C_{g,n}$) represents the average of the torque values generated by all the engine cylinders.

3. A method for detecting a misfire according to claim 2, the engine comprising:

   - measuring indicators (14, 16) located on a ring (12) which is solid with the engine crankshaft;
   - means (18, 20) for defining an indexing reference for the indicators;
   - a sensor (22) for measuring the movement of the indicators fixably mounted in the vicinity of the ring (12);
   - signal processing means (10) to produce, from the signal issuing from the sensor (22), values representing the torque ($C_{g,n}$) generated by each firing (n) of the gaseous mixture in the engine cylinders, characterized in that it comprises the following operations which are repeated after each firing:

     a) for each torque value ($C_{g,n}$) produced by the signal processing means (10), indicating the cylinder (i) in which the firing occurred;
     b) from each torque value ($C_{g,n}$), calculating a statistical figure ($MC_{g,n}$) which represents the average of the torque values over a given number of firings over all the cylinders;
     c) comparing the torque value ($C_{g,n,i}$) with a threshold value deduced from said statistical figure ($MC_{g,n}$);
     d) producing a value (V,n,i) indicating the existence of a misfire in one engine cylinder (i) when the statistical figure ($C_{g,n,i}$) is less than said threshold value.

4. A method for detecting misfires according to claim 3, characterized in that operation (c) comprises the following operations:

   (c1) calculating the difference ($\Delta C_{g,n,i}$) between said torque value ($C_{g,n,i}$) and the statistical figure ($MC_{g,n}$);
   (c2) calculating the ratio ($RC_{g,n,i}$) between said difference ($\Delta C_{g,n,i}$) and said statistical figure ($MC_{g,n}$);
   (c3) comparing said ratio ($RC_{g,n,i}$) with a predetermined threshold value ($-S_1$).

**5.** A method for detecting misfires according to claim 3 or claim 4, characterized in that operation (d) is made up of the following operations:

e) from values (V,n,i) indicating the existence of a misfire in one engine cylinder (i), calculating the total number (T,n,i) of misfires occurring during a predetermined number of engine cycles;
f) comparing said total number (T,n,i) of misfires with a predetermined threshold value ($S_2$);
g) producing a value (W,n,i) indicating the existence of an abnormal number of misfires in one engine cylinder (i) when said number (T,n,i) is greater than said threshold value ($S_2$).

**6.** A method for detecting misfires according to claim 5, characterized in that operation (g) is made up of the following operation:

f) displaying the values (W,n,i) indicating the presence or absence of an abnormal number of misfires, identifying the cylinder (i) affected.

**7.** A method for detecting misfires according to any one of claims 3 to 6, characterized in that each threshold value is specific to the corresponding cylinder.

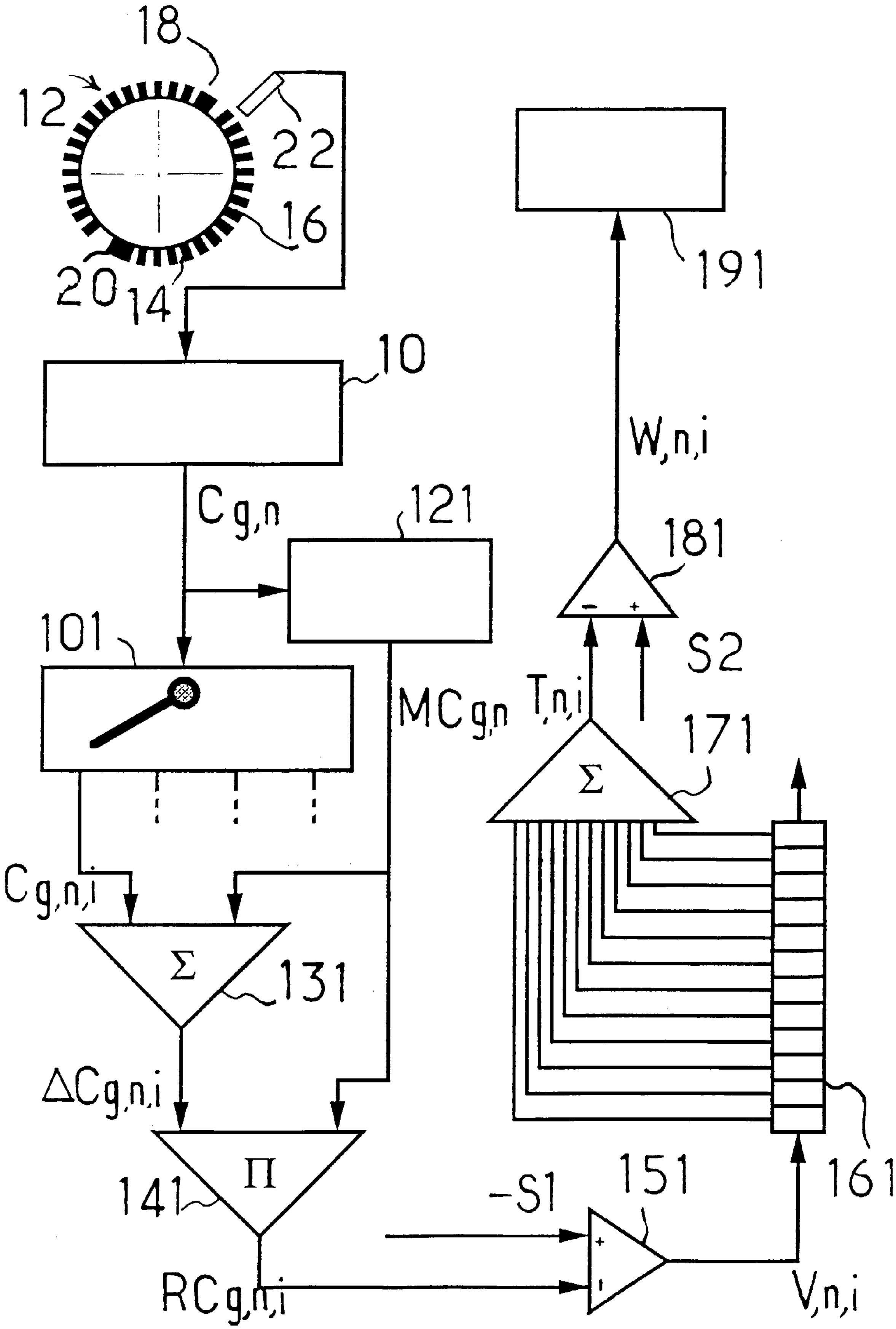
18
12
22
16
20
14
10
191
W,n,i
Cg,n
121
181
101
S2
MCg,n
T,n,i
171
Σ
Cg,n,i
Σ
131
ΔCg,n,i
Π
141
-S1
151
161
RCg,n,i
V,n,i